# EUROPÄISCHE PATENTANMELDUNG

(11) **EP 2 332 800 A2**
(43) Veröffentlichungstag der Anmeldung: **15.06.2011**
(21) Anmeldenummer: 10015213.1
(22) Anmeldetag: 02.12.2010
(51) Int. Cl.: B61D 17/10, B61D 27/00, F24D 13/02

(54) **Verbundelement mit einer Heizeinrichtung**

(30) Priorität: 11.12.2009 DE 102009057874
(71) Anmelder: 3A Technology & Management Ltd., 8212 Neuhausen am Rheinfall (CH)
(72) Erfinder: Anderegg, Kurt, 9424 Rheineck (CH); Dalferth, Oliver, 78244 Gottmadingen (DE); Heisel, Hans- Jürgen, 78224 Singen (Hohentwiel) (DE); Johnen, Uwe, 78224 Singen (Hohentwiel) (DE); Schütz, Ekkehard, 78224 Singen (Hohentwiel) (DE)

(57) **Zusammenfassung**

Die Erfindung betrifft ein Verbundelement (10, 10a; 20, 20a) mit einer Helzeinrichtung, mit einer oberen Deckplatte (11), einer unteren Deckplatte (18) und einem zwischen den beiden Deckplatten (11, 18) angeordneten, flächenartigen Heizelement (15). Erfindungsgemäß Ist es vorgesehen, dass wenigstens eine zusätzliche Zwischenschicht (13, 16; 21) vorgesehen ist, die auf wenigstens einer der beiden Seiten des Heizelements (15) angeordnet ist,

## Beschreibung

### Stand der Technik

Die Erfindung betrifft ein Verbundelement mit einer Heizeinrichtung nach dem Oberbegriff des Anspruchs 1.

Ein derartiges Verbundelement mit einer Heizeinrichtung ist aus der nachveröf fentlichten DE 10 2009 022 091 A1 der Anmelderin bekannt. Das dort verwendete Verbundelement ist Bestandteil insbesondere einer Boden- bzw. Wandstruktur in einem Schienenfahrzeug und dient der Erwärmung des Innenraums des Schienenfahrzeugs. ln dem bekannten Verbundelement ist ein Heizelement in Form einer Heizfolle angeordnet. Die elektrischen Anschlüsse ragen seitlich aus dem Verbundelement heraus und sind bei montiertem Verbundelement unterhalb des Verbundelements in Trägern einer das Verbundelement aufnehmenden Bodenstruktur geführt bzw. angeordnet.

Ferner sind in allgemeiner Art und Weise Verbundplatten mit zwei Deckschichten bekannt, zwischen denen ein Kern aus insbesondere geschäumtem, gelochtem oder sonstwie ausgebildetem Kunststoff angeordnet ist. Als Deckschichten werden beispielsweise Platten, Tafeln oder Bleche aus Metall, Kunststoff, Holz oder aus diesen Werkstoffen gefertigte Laminate verwendet. Auf diese bekannten Verbundplatten, welche auch verformbar sein können, werden z.B. Heizplatten angeordnet. Nachteilig dabei ist, dass diese Heizplatten empfindlich gegenüber Feuchtigkeit, Wasser oder Beschädigung sind, da die insbesondere als Heizfolien ausgebildeten Heizplatten offen liegen und daher aufwändig konstruktiv gegenüber schädlichen Umwelteinflüssen isoliert werden müssen, z.B. durch eine weitere Umhüllung. Das Vorsehen einer derartigen zusätzlichen Schutzhülle wirkt sich nachteilig auf die Wärmekonvektion aus und erhöht das Gewicht der Verbundplatte bzw. der Gesamtkonstruktlon. Zusätzlich muss die Heizfolie nachträglich in einem zusätzlichen Arbeitsgang auf die bereits gefertigte Verbundplatte aufkaschiert werden.

### Offenbarung der Erfindung

Ausgehend von dem dargestellten Stand der Technik liegt der Erfindung die Aufgabe zugrunde, ein Verbundelement mit einer Heizeinrichtung nach dem Oberbegriff des Anspruchs 1 derart weiterzubilden, dass das Verbundelement gegenüber äußeren Einflüssen, insbesondere gegenüber dem Eintritt von Feuchtigkeit, geschützt ist. Gleichzeitig soll eine möglichst einfache und kostengünstige Fertigung und ein geringes Gewicht des Verbundelements erzielt werden. Diese Aufgabe wird bei einem Verbundelement mit einer Heizeinrichtung mit den Merkmalen des Anspruchs 1 gelöst. Der Erfindung liegt dabei die ldee zugrunde, durch das Vorsehen wenigstens einer zusätzlichen Zwischenschicht, einen weitgehend gekapselten bzw. geschützten Aufbau des Heizelements zu bewirken, sodass der Zutritt von insbesondere Feuchtigkeit zumindest erschwert wird.

Vorteilhafte Welterblidungen des erfindungsgemäßen Verbundelements mit einer Heizeinrichtung sind in den Unteransprüchen angegeben. ln den Rahmen der Erfindung fallen sämtliche Kombinationen aus zumindest zwei von in den Ansprüchen, der Beschreibung und/oder den Figuren offenbarten Merkmalen.

Besonders vorteilhaft ist es, wenn das Verbundelement zusätzlich in den seitlichen Randbereichen des Heizelements abgedichtet ausgebildet ist. Somit wird der Zutritt von Medien von den Stirnseiten der Heizeinrichtung her vermieden.

ln einer bevorzugten Ausführungsform der Erfindung ist es weiterhin vorgesehen, dass zumindest die Deckplatte aus gut wärmeleitendem Material, insbesondere aus Aluminium, besteht, dass das Heizelement auf seiner der Deckplatte zugewandten Oberseite mit der Deckplatte wärmeleitend verbunden, insbesondere verklebt, ist und, dass die Unterseite des Heizelements mit der wenigstens einen Zwischenschicht verbunden, insbesondere verklebt oder verschmolzen, ist. Ein derartiger, sandwichartiger Aufbau bewirkt zum einen eine hohe Festigkeit bei relativ geringem Gewicht und zum anderen eine optimale Wärmeabstrahlung an die Umgebung.

ln einer alternativen Ausgestaltung hierzu ist es vorgesehen, dass zumindest die Deckplatte aus gut wärmeleitendem Material, insbesondere aus Aluminium, besteht, dass das Heizelement auf seiner Oberseite und seiner Unterseite von jeweils einer Zwischenschicht umgeben ist und, dass zumindest die Oberseite des Heizelements mit seiner zugeordneten Zwischenschicht und die Zwischenschicht mit der Deckplatte jeweils wärmeleitend verbunden, insbesondere ver klebt, sind. Eine derartige Ausbildung erhöht im Verhältnis zu der zuletzt genannten Ausführung zusätzlich die Festigkeit und bewirkt einen besonders guten Schutz des Heizelements zwischen den beiden Zwischenschichten.

Besonders bevorzugt ist es vorgesehen, wenn die wenigstens eine zusätzliche Zwischenschicht aus Kunststoff, insbesondere einem Polymer wie beispielsweise Polypropylen (PP), besteht. Wesentlich hierbei ist, dass die wenigstens eine Zwischenschicht in der Lage sein muss, die durch das Heizelement verursachte Hitze unbeschadet zu überstehen. Da derartige bekannte Heizelemente eine Temperatur bis zu 130°C erreichen können, wobei die normale Betriebstemperatur meist deutlich darunter, z.B. zwischen 60°C und 80°C, liegt, ist es erforderlich, dass das für die wenigstens eine Zwischenschicht verwendete Material einen Schmelzpunkt aufweist, der Ober den angegebenen Temperaturen liegt.

Besonders bevorzugt ist weiterhin, wenn das Heizelement mehrere streifenförmige Heizeinheiten ausweist, und wenn zwischen den Heizeinheiten jeweils streifenförmige Bereiche ausgebildet sind. Eine derartige Ausgestaltung schafft zum einen die Möglichkeit, das Verbundelement besonders wirtschaftlich in elnem kontinuierlichen Produktionsprozess herzustellen und anschließend das Verbundelement durch Trennen bzw. Aussägen streifenförmiger Elemente zwischen den jeweiligen Heizeinheiten in handels- bzw. fertigungsgerechte Einheiten zu unterteilen. Alternativ hierzu ist es mittels der beanspruchten Ausgestaltung möglich, dass das Verbundelement insbesondere einfach mit einer Wand- bzw. Bodenkonstruktion verbunden werden kann, indem z.B. im Bereich der streifenförmigen Bereiche zwischen den Heizeinheiten unterhalb des Verbundelements Träger angeordnet sind, welche durch Anbindung, z.B. mit Schrauben, in den Zwischenbereichen mit den Verbundelementen bzw. dem Verbundelement fest verbunden werden können.

Besonders vorteilhaft ist es weiterhin, wenn die Heizeinheiten jeweils separate Anschlussleltungen aufweisen. So wird bei einer nachträglichen Aufteilung des Verbundelements in kleinere Einheiten damit eine einfachere elektrische Ankopplung der Heizeinheiten ermöglicht, ohne dass hierzu weitere Fertigungsschritte erforderlich sind, bzw. es ist beim Einsatz eines großflächigen Verbundelements beim Ausfall einer elektrischen Anschlussleitung oder einer Heizeinheit der Betrieb der restlichen Heizeinheiten gewährleistet.

ln einer weiteren bevorzugten Ausführungsform ist es vorgesehen, dass die beiden Deckplatten aus dem gleichen Material bestehen. Dadurch lässt sich (insbesondere, wenn auch die Deckplatten dieselbe Materialstärke aufweisen) eine besonders rationelle Fertigung der Verbundelemente erzielen.

Um einerseits die Funktionalität des Verbundelements zu gewährleisten und andererseits das Gewicht des Verbundelements möglichst gering zu halten, ist es in einer weiteren Ausgestaltung der Erfindung vorgesehen, dass die Gesamtdicke des Verbundelements zwischen 0,5 mm und 100 mm beträgt.

Eine alternative elektrische Ankopplung der Heizelemente ist dann möglich, wenn die elektrische Kontaktierung des Heizelements über zumindest eine der Deckplatten erfoigt und, wenn die der elektrischen Kontaktierung dienende Deckplatte elektrisch leitend ausgebildet ist. ln diesem Falle genügt es, zwischen der Deckplatte und dem Heizelement eine relativ kurze elektrische Verbindung herzustellen, sodass auf längere Anschlussleitungen, die ggf. räumlich schwer zu integrieren sind, verzichtet werden kann.

Eine weitere vorteilhafte Ausführungsform der Erfindung sieht vor, dass das Verbundelement durch einen Umformprozess 3-dimensional verformt ausgebildet ist. Dadurch wird insbesondere die Festigkeit des Verbundelements bei gleichem Gewicht gesteigert, und es eröffnet sich die Möglichkeit, durch eine entsprechende Ausgestaltung den Wärmeübergang an die Umgebung besonders vorteilhaft auszubilden.

Hierbei ist es insbesondere vorgesehen, dass das Verbundelement im Querschnitt über seine Breite betrachtet eine Vielzahl von gleichen Strukturelementen aufweist. Eine derartige, regelmäßige Strukturierung schafft insbesondere eine gleichförmige Verstärkung des Verbundelements sowie eine gleichmäßige Wärmeabstrahlung.

Besonders bevorzugt ist es hierbei, wenn die Strukturelemente längliche Kanäle zur Unterstützung der Wärmekonvektion aufweisen. Insbesondere ist es dabei vorteilhaft, wenn die Strukturelemente eine Wellen- oder Trapezform aufweisen.

Weitere Vorteile, Merkmale und Einzelheiten der Erfindung ergeben sich aus der nachfolgenden Beschreibung bevorzugter Ausführungsbeispleie sowie anhand der Zeichnungen.

Diese zeigen in:
- Fig. 1: einen Längsschnitt durch ein erstes erfindungsgemäßes Verbundelement unter Verwendung zweier Zwischenschichten,
- Fig. 2: einen Längsschnitt durch ein zweites erfindungsgemäßes Verbundelement unter Verwendung einer einzigen Zwischenschicht,
- Fig. 3: eine Draufsicht auf einen Abschnitt eines kontinuierlich gefertigten Ver bundelemente gemäß den Fig. 1 oder 2,
- Fig. 4: einen Schnitt durch ein Verbundelement gemäß der Fig. 2 zur Verdeutlichung der elektrischen Kontaktierung der Heizeinheiten,
- Fig. 5: einen Schnitt durch ein Heizelement gemäß Fig. 1 zur Verdeutlichtung der elektrischen Kontaktierung der Heizeinheiten.
- Fig. 6, Fig. 7: eine Draufsicht bzw. einen Schnitt durch ein mit einer Wand verbundenes Verbundelement und
- Fig. 8, Fig. 9: vereinfachte Schnitte durch jeweils ein Verbundelement nach einer 3-dimensionalen Verformung des Verbundelements.

Gleiche Bauteile bzw. Bauteile mit derselben Funktion sind in den Figuren mit denselben Bezugsziffern versehen.

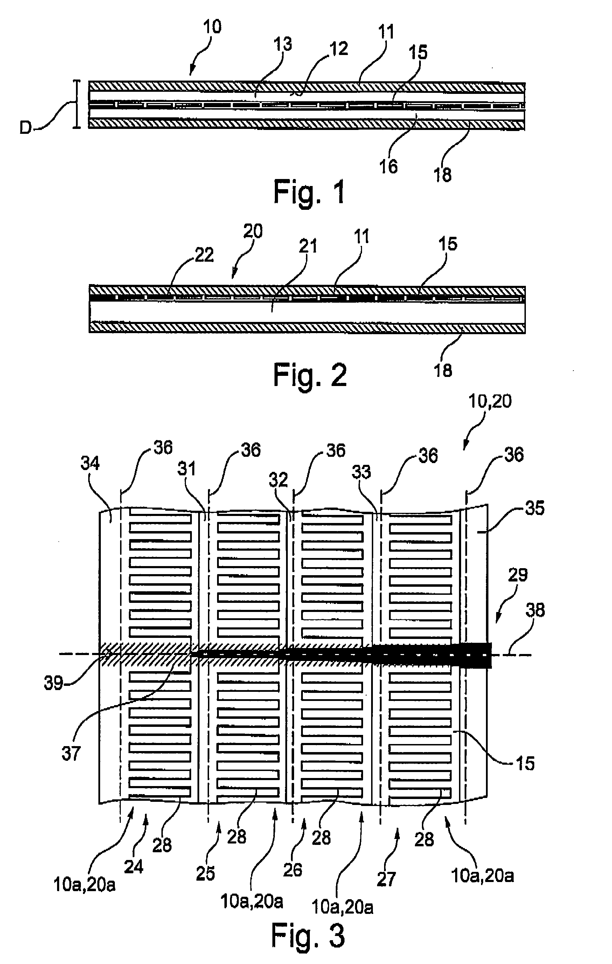

In der Fig. 1 ist ein erstes erfindungsgemäßes Verbundelement 10 dargestellt. Das sandwichartig ausgebildete Verbundelement 10 weist hierbei eine obere Deckplatte 11 auf, die insbesondere aus gut wärmeleitendem Material, besonders bevorzugt aus Aluminium, besteht. Die Deckplatte 11 kann hierbei eine glatte Oberfläche aufweisen, oder aber strukturiert ausgebildet sein. Die obere Deckplatte 11 ist an ihrer Unterseite 12 mit einer ersten Zwischenschicht 13 verbunden. An die erste Zwischenschicht 13 schließt sich ein flächig ausgebildetes Heizelement 15 an, das Bestandteil einer Heizeinrichtung für das Verbundelement 10 ist. Das Heizelement 15 ist auf der der ersten Zwischenschicht 13 abgewandten Seite mit einer zweiten Zwischenschicht 16 verbunden. Die Unterseite 17 der zweiten Zwischenschicht 16 ist wiederum mit einer unteren Deckplatte 18 verbunden.

Bevorzugt bestehen die obere Deckplatte 11 und die untere Deckplatte 18 aus demselben Material und weisen jeweils dieselbe Dicke auf. Die beiden Zwischenschichten 13 und 16 bestehen Insbesondere aus Kunststoff und weisen im dargestellten Ausführungsbeispiel dieselbe Dicke auf. Als besonders bevor zugte Kunststoffe kommen Polymere, beispielsweise Polypropylen (PP) zur Anwendung. Wesentlich hierbei ist, dass durch die Verwendung eines geeigneten Kunststoffes sichergestellt ist, dass die Zwischenschichten 13 und 16 eine höhere Schmelztemperatur aufweisen als die während des Betriebs erreichbare Temperatur des Heizelements 15.

Weiterhin wird erwähnt, dass die Gesamtdicke D des Verbundelements 10 bei Verwendung von Kunststoff für die beiden Schichten 13 und 16 bevorzugt zwischen 0,5 mm und 10 mm beträgt. Wenn hingegen insbesondere die zweite Schicht 16 aus einem anderen Material als Kunststoff, insbesondere aus Holz gefertigt ist, so liegt die Gesamtdicke D bevorzugt im Bereich von 5 mm bis 100 mm.

In der Fig. 2 ist ein gegenüber der Fig. 1 modifiziertes bzw. abgewandeltes Verbundelement 20 dargestellt. Das Verbundelement 20 zeichnet sich Im Gegensatz zum Verbundelement 10 durch die Verwendung lediglich einer einzigen Zwischenschicht 21 aus. Hierbei befindet sich die Zwischenschicht 21 an der Unterseite des Heizelements 15, welches wiederum mit seiner Oberseite 22 direkt mit der oberen Deckplatte 11 verbunden ist. In dem in der Fig. 2 dargesteliten Ausführungsbeispiel entspricht die Dicke der Zwischenschicht 21 in etwa der Gesamtdicke der beiden Zwischenschichten 13 und 16 des Verbundelements 10. Es wird darauf hingewiesen, dass die Dicke der Zwischenschicht 21 jedoch auch geringer oder größer ausgewählt sein kann.

Das in den Verbundelementen 10 und 20 verwendete Heizelement 15 ist insbesondere als flächiges bzw. dünnes Element in Form einer Heizfolie ausgebildet, welche insbesondere mäanderförmig angeordnete Heizdrähte 28 (vergleiche Fig. 3) aufweist, welche von zwei Kunststoffschichten umschlossen bzw. zwischen zwei Kunststoffschichten eingeschlossen sind. Für den Fall, dass die bei dem Heizelement 15 verwendeten Kunststoffschichten aus demselben Material wie die Zwischenschichten 13, 16 bzw. 21 besteht, ergibt sich somit die Möglichkeit, dass das Heizelement 15 mit den jeweiligen Zwischenschichten 13, 16 bzw. 21 durch Erhitzen verbunden werden kann, indem das Heizelement 15 bzw. die Zwischenschichten 13,16 bzw. 21 an deren Oberflächen miteinander verschmelzen, Alternativ hierzu ist es jedoch auch möglich, dass das Heizelement 15 mit den jeweiligen Zwischenschichten 13, 16 bzw. 21 vollflächig, insbesondere wärmeleitend, verklebt sind. Weiterhin sind alternativ weitere Ver blndungstechnlken möglich, zum Beispiel Atzen, Aufdrucken, usw..

in der Fig. 3 ist in Draufsicht ein Verbundelement 10 bzw. 20 dargestellt, dessen Heizelement 15 aus vier, nebeneinander angeordneten Heizeinheiten 24 bis 27 besteht. Das Verbundelement 10, 20 weist hierbei zum Beispiel eine Gesamtbreite zwischen 1000mm und 3000mm auf. Ferner erkennt man jeweils die mäanderartig angeordneten Heizdrähte 28 bei jeder Heizeinheft 24 bis 27. Die Heizdrähte 28 sind im Ausführungsbeispiel teilweise auf der rechten Seite des Verbundelements 10, 20 seitlich in einem Bereich 29 herausgeführt. In diesem Bereich 29 werden die Heizdrähte 28 elektrisch kontaktiert bzw. mit Stecker elementen versehen.

Ergänzend wird erwähnt, dass das Herausführen der Heizdrähte 28 zur elektrischen Kontaktierung selbstverständlich auch seitlich auf beiden Selten des Verbundelements 10, 20 erfolgen kann.

Ferner erkennt man, dass zwischen den Heizeinheiten 24 bis 27 jeweils streifenförmige Zwischenbereiche 31 bis 33 ausgebildet sind. Auch erkennt man beidseitig jeweils einen Randbereich 34 bzw. 35. Mit den längs in Produktionsrichtung nur zur illustration dargestellten Trennlinien 36 sind die Bereiche gekennzeichnet, in denen das Verbundelement 10, 20 vorteilhafterwelse getrennt werden kann, um damit streifenförmige Verbundelemente 10a, 20a auszubilden, die gegenüber dem in der Fig. 3 dargestellten Verbundelement 10, 20 eine geringere Breite aufweisen. Ferner ist quer zur Produktionsrichtung durch eine Trennlinie 38 der Bereich des Verbundelements 10, 20 dargestellt, in dem vorteilhafterweise eine Quertrennung der Heizelemente 10a, 20a stattfinden soll, um ebenfalls kleinere Baueinheiten in Längsrichtung zu erzielen, da damit eine optimale elektrische Anbindung der Heizeinhelten 24 bis 27 über die Heizdrähte 28 an externe Kontaktierungen, wie Stecker, für die jeweilige Heizeinheit 24 bis 27 gegeben ist. So ist es beispielhaft vorgesehen, die Heizdrähte 28 der beiden linken Heizeinheiten 24, 25 an der Schnittkante in dem Bereich 37 elektrisch zu kontaktieren.

Zusätzlich ist eine beispielsweise magnetische oder optische Markierung 39 vorgesehen, die zum Auffinden der Trennlinie 38 dient.

Ergänzend wird erwähnt, dass es zur elektrischen Ansteuerung bzw. Verbindung der Heizeinheiten 24 bis 27 auch denkbar ist, diese über eine (oder beide) der elektrisch leitenden Deckplatten 11,18 zu verbinden. Hierzu ist die entsprechende Deckplatte 11, 18 dann mit einem elektrischen Anschluss versehen, wobei ein Bereich der Deckplatte 11, 18 mit der entsprechenden Heizeinheit 24 bis 27, ggf. über eine sehr kurze Leitung als Verbindungselement, gekoppelt ist.

Wesentlich ist auch, dass das Heizelement 15 bzw. die Heizeinheiten 24 bis 27 durch eine Anordnung entweder zwischen den Zwischenschichten 13 und 16 entsprechend der Fig. 1 bzw. zwischen der Zwischenschicht 21 und der oberen Deckplatte 11 entsprechend der Fig. 2 unterhalb der oberen Deckplatten 11 angeordnet und somit insbesondere gegenüber dem Zutritt von Medien, wie Feuchtigkeit, geschützt sind. Weiterhin ist es vorteilhaft, wenn auch die seitlichen Randbereiche der Heizeinheiten 24 bis 27 im Bereich der Zwischenbereiche 31 bis 33 bzw. der Randbereiche 34, 35 geschützt angeordnet sind. Dies erfolgt zum Beispiel durch eine entsprechende Einbettung bzw. Verklebung oder Verschmelzung zwischen den Zwischenschichten 13 und 16 bzw. zwischen der Zwischenschicht 21 und der oberen Deckplatte 11. Alternativ hierzu kann es auch vorgesehen sein, dass die seitlichen Randbereiche 34, 35 durch Ausbildung einer Bördelung, Verschweißung, oder aber durch Vorsehen zum Beispiel eines U-förmigen Schutzprofils, das die Stirnflächen der Randbereiche 34, 35 überdeckt, geschützt werden können.

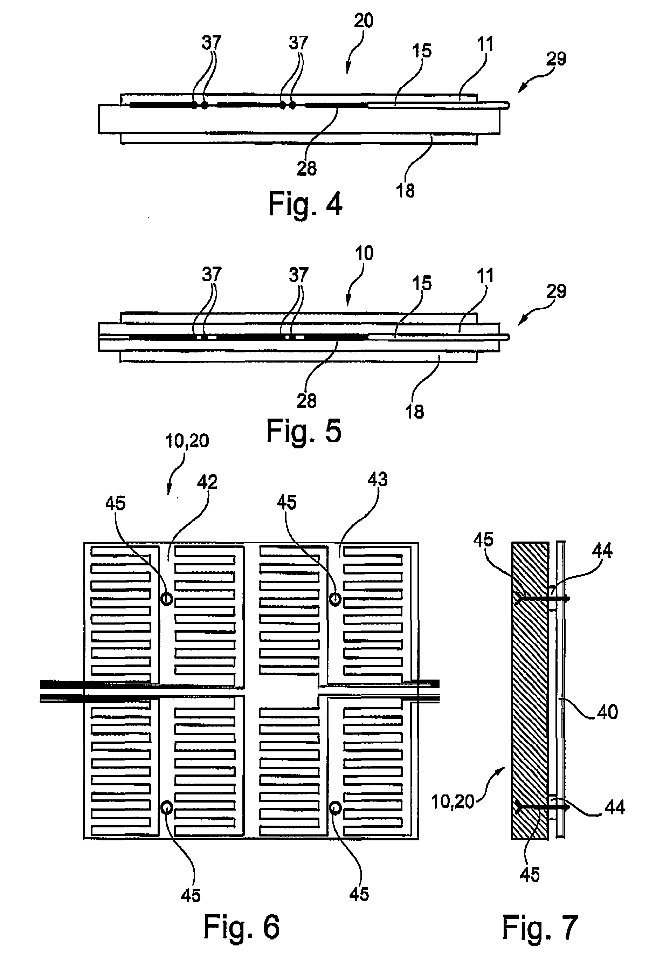

in den Fig. 4 und 5 ist insbesondere die elektrische Anbindung der Heizeinhalten 24 bis 27 bzw, des Heizelements 15 in den Bereichen 29 bzw. 37 erkennbar, welche eine Anbindung der Heizdrähte 28 quer bzw. längs zur Produktionsrichtung der Heizeinheiten 24 bis 27 ermöglichen.

in den Fig. 6 und 7 Ist ein Verbundelement 10, 20 mit einer Wandplatte 40 verbunden. Hierbei sind zwischen dem Verbundelement 10, 20 und der Wandplatte 40 jeweils im Bereich der Zwischenbereiche 42, 43 Distanzelemente 44 angeordnet, die eine Entkopplung des Verbundelements 10, 20 von der Wandplat.. te 40 sowie eine Hinterlüftung des Verbundelements 10, 20 bewirken. Die mechanische Anbindung bzw. Verbindung des Verbundelements 10, 20 mit der Wandplatte 40 erfolgt bevorzugt durch Schraubelemente 45, die flächenbündig mit der Oberseite des Verbundelements 10, 20 abschließen.

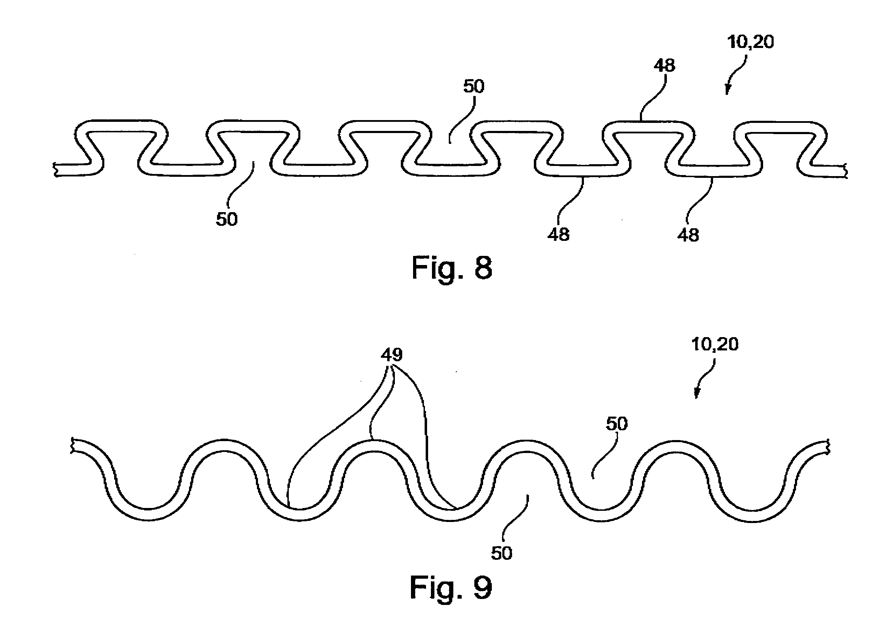

In den Fig. 8 und 9 ist dargestellt, wie ein Verbundelement 10, 20 aus dem in den Figuren 1 und 2 dargestellten, ebenen Zustand in einen 3-dimensionalen Zustand umgeformt ist. Hierbei werden gemäß Fig. 8 Strukturelemente in Form trapezförmiger Querschnittsbereiche 4.8 erzielt, während entsprechend der Fig. 9 das Verbundelement 10, 20 gewellte Querschnittsbereiche 49 aufweist. Wesentlich hierbei ist, dass durch die Querschnittsbereich 48 bzw. 49 längliche Kanäle 50 ausgebildet werden, die der Wärmekonvektion dienlich sind bzw. den Wärmeübergang von dem Heizelement 15 an die Umgebung erleichtern. Zusätzlich wird durch eine derartige, 3-dimenslonale Strukturierung des Verbundelements 10, 20 die Festigkeit des Verbundelements 10, 20 beträchtlich erhöht.

Ergänzend wird erwähnt, dass anstelle trapezartiger oder gewellter Querschnittsbereiche auch beliebige andere Querschnittsformen denkbar sind, zum Beispiel dreiecksartige Querschnittsformen.

Der Einsatz der Verbundelemente 10, 20 ist sowohl In dem in den Fig. 1 und 2 dargestellten ebenen bzw. plattenförmigen Zustand, als auch in dem in den Fig. 8 und 9 dargestellten verformten Zustand denkbar.

Ferner wird erwähnt, dass der Einsatz der zuvor beschriebenen Verbundelemente 10, 20 bevorzugt In Fahrzeugen, insbesondere in Schienenfahrzeugen erfolgt. Jedoch ist deren Einsatz und Verwendung darüber hinaus universell In den verschiedensten Bereichen und Anwendungen bzw. Gebrauchsgegenständen denkbar, da deren Größe und Form dem jeweiligen Einsatzzweck in einfacher Weise angepasst werden kann.

### Bezugszeichenliste

- 10,a: Verbundelement
- 11: obere Deckplatte
- 12: Unterseite
- 13: erste Zwischenschicht
- 15: Heizelement
- 16: zweite Zwischenschicht
- 17: Unterseite
- 18: untere Deckplatte
- 20,a: Verbundelement
- 21: erste Zwischenschicht
- 22: Oberseite
- 24: Heizeinheit
- 25: Heizeinheit
- 26: Heizeinheit
- 27: Heizeinheit
- 28: Heizdraht
- 29: Bereich
- 31: Zwlschenbereich
- 32: zwlschenbereich
- 33: Zwischenbereich
- 34: Randbereich
- 35: Randbereich
- 36: Trennllnle
- 37: Bereich
- 38: Trennlinie
- 39: Markierung
- 40: Wandplatte
- 42: Zwlschenbereich
- 43: Zwlschenbereich
- 44: Distanzelement
- 45: Schraubelement
- 48: Querschnittsbereich
- 49: Querschnittsbereich
- 50: Kanal
- D: Gesamtdicke

## Patentansprüche

1. Verbundelement (10, 10a; 20, 20a) mit einer Heizeinrichtung, mit einer oberen Deckplatte (11), einer unteren Deckplatte (18) und einem zwischen den beiden Deckplatten (11,18) angeordneten, flächenartigen Heizelement (15),
**dadurch gekennzeichnet,**
**dass** wenigstens eine zusätzliche Zwischenschicht (13, 16; 21) vorgesehen ist, die auf wenigstens einer der beiden Seiten des Heizelements (15) angeordnet ist.

2. Verbundelement (10, 10a; 20, 20a) nach Anspruch 1,
**dadurch gekennzeichnet,**
**dass** das Verbundelement (10, 10a; 20, 20a) in seinen seitlichen Randbereichen (31 bis 35) zumindest in der Ebene des Heizelements (15) abgedichtet ausgebildet ist.

3. Verbundelement nach Anspruch 1 oder 2,
**dadurch gekennzeichnet,**
**dass** zumindest die Deckplatte (11) aus gut wärmeleitendem Material, insbesondere aus Aluminium besteht, dass das Heizelement (15) auf seiner der Deckplatte (11) zugewandten Seite mit der Deckplatte (11) wärmeleitend verbunden, insbesondere verklebt ist und, dass die Unterseite des Heizelements (15) mit der wenigstens einen Zwischenschicht (21) verbunden, insbesondere verklebt oder verschmolzen ist.

4. Verbundelement nach Anspruch 1 oder 2,
**dadurch gekennzeichnet,**
**dass** zumindest die Deckplatte (11) aus gut wärmeleitendem Material, insbesondere aus Aluminium besteht, dass das Heizelement (15) auf seiner Oberseite und seiner Unterseite von jeweils einer Zwischenschicht (13,16) umgeben ist und, dass zumindest die Oberseite des Heizelements (15) mit seiner zugeordneten Zwischenschicht (13) und die Zwischenschicht (13) mit der Deckplatte (11) jewells wärmeleitend verbunden, insbesondere verklebt sind.

5. Verbundelement nach einem der Ansprüche 1 bis 4,
**dadurch gekennzeichnet,**
**dass** das Heizelement (15) auf der der oberen Deckplatte (11) abgewandten Unterseite mit der unteren Deckplatte (18) bzw. mit der zusätzlichen Zwischenschicht (16) verbunden ist, wobei beim Vorhandensein der zusätzlichen Zwischenschicht (16) diese wiederum mit der unteren Deckplatte (18) verbunden ist.

6. Verbundelement nach einem der Ansprüche 1 bis 5,
**dadurch gekennzeichnet,**
**dass** die wenigstens eine zusätzliche Zwischenschicht (13, 16; 21) aus Kunststoff, insbesondere einem Polymer wie beispielsweise Polypropylen besteht.

7. Verbundelement nach einem der Ansprüche 1 bis 6,
**dadurch gekennzeichnet,**
**dass** das Heizelement (15) mehrere streifenförmige Heizeinheiten (24 bis 27) aufweist und, dass zwischen den Heizeinheiten (24 bis 27) und an deren Randbereichen jeweils streifenförmige Bereiche (31 bis 35) ausgebildet sind.

8. Verbundelement nach Anspruch 7,
**dadurch gekennzeichnet,**
**dass** die Heizeinheiten (24 bis 27) jeweils separate Anschluseleitungen zur elektrischen Kontaktierung der Heizeinheiten (24 bis 27) aufweisen.

9. Verbundelement nach einem der Ansprüche 1 bis 8,
**dadurch gekennzeichnet,**
**dass** die beiden Deckplatten (11, 18) aus dem gleichen Material bestehen.

10. Verbundelement nach einem der Ansprüche 1 bis 9,
**dadurch gekennzeichnet,**
**dass** die Gesamtdicke des Verbundelements (10, 10a; 20, 20a) zwischen 0,5mm und 100mm beträgt.

11. Verbundelement nach einem der Ansprüche 1 bis 10,
**dadurch gekennzeichnet,**
**dass** die elektrische Kontaktierung des Heizelements (15) bzw. der Heizeinheiten (24 bis 27) über zumindest eine der Deckplatten (11, 18) erfolgt und, dass die der elektrischen Kontaktierung dienende Deckplatte (11,18) elektrisch leitend ausgebildet ist.

12. Verbundelement nach einem der Ansprüche 1 bis 11,
**dadurch gekennzeichnet,**
**dass** das Verbundelement (10, 10a; 20, 20a) durch einen Umformprozess 3-dimensional verformt ausgebildet ist.

13. Verbundelement nach Anspruch 12,
**dadurch gekennzeichnet,**
**dass** das Verbundelement (10, 10a; 20, 20a) im Querschnitt über seine Breite betrachtet eine Vielzahl von gleichen Strukturelementen (48, 49) aufweist.

14. Verbundelement nach Anspruch 13,
**dadurch gekennzeichnet,**
**dass** die Strukturelemente (48, 49) längliche Kanäle (50) zur Unterstützung der Wärmekonvektion ausbilden.

15. Verbundelement nach Anspruch 14,
**dadurch gekennzeichnet,**
**dass** die Strukturelemente (48, 49) eine Wellen- oder Trapezform aufweisen.
